# EUROPEAN PATENT APPLICATION

(11) **EP 3 245 863 A1**
(43) Date of publication of application: **22.11.2017**
(21) Application number: 16707199.2
(22) Date of filing: 13.01.2016
(51) Int. Cl.: A01G 9/02, A01G 31/02

(54) **CONTAINER FOR PLANTS**

(30) Priority: 14.01.2015 PT 10814815
(71) Applicant: FOODFARMBIZ LDA, 1400-249 Lisbon (PT)
(72) Inventor: RODRIGUES, Manuel Maria, 2790-151 Carnaxide (PT)
(74) Representative: Pereira da Cruz, Joao
(86) International application number: PCT/IB2016/050141
(87) International publication number: WO 2016/113681

(57) **Abstract**

This invention pertains to a plant container. The plant container is characterised, essentially, by: a rigid frame (1) formed by at least two mounting supports (2), one for each side of the container, a top ring (3) preferably in a quadrilateral shape, supplemented with lateral and transverse (5) and longitudinal reinforcing beams (4); a soil, water or plant substrate reservoir (6), supported on said frame; a water deposit (7); and a water transmission system to said substrate.

## Description

### Invention field and purpose

This invention belongs to the field of farming and relates more specifically to a container for any kind of plants, comprising the features of the attached claims. Essentially, the container of the invention comprises: a rigid frame formed by at least two mounting supports, one for each side of the container, a top ring preferably in a quadrilateral shape, supplemented with lateral and transverse and longitudinal reinforcing beams;
- A soil, plant or hydroponic solution substrate reservoir, supported in said frame;
- A water deposit; and
- A water transmission system to said substrate.

### Prior art

Several devices that allow gardening and farming of various plant species are known.

These devices or plant growth modules are usually known as flower boxes, various kinds of plant pots and other similar products.

However, the applicant has no knowledge of existing containers that allow for a supporting reservoir structure and are simultaneously equipped with a water deposit and linked irrigation system.

### Summary of the invention

This invention provides a container to grow, plant, fertilize and maintain plants, according to claim 1. Preferential characteristics of the invention are also provided in accordance with the dependent claims.

The purpose of this invention is, therefore, to provide a container to grow, plant, fertilize and maintain plants, and it includes:
- a rigid frame formed by at least two mounting supports, one for each side of the container, a top ring, preferably in a quadrilateral shape, supplemented with lateral and transverse and longitudinal reinforcing beams;
- a plant substrate container supported in said frame;
- a water deposit; and
- a water transmission system to said substrate.

Other advantages, characteristics and particularities of the invention will be understood from the description that follows for preferred embodiments, as well as references to the drawings, which serve only to clarify and should not be interpreted in a restrictive manner.

### Brief description of the drawings

- Figure 1 represents a perspective view of the container in its most simplified form;
- Figure 2 represents an exploded view of the container shown in figure 1;

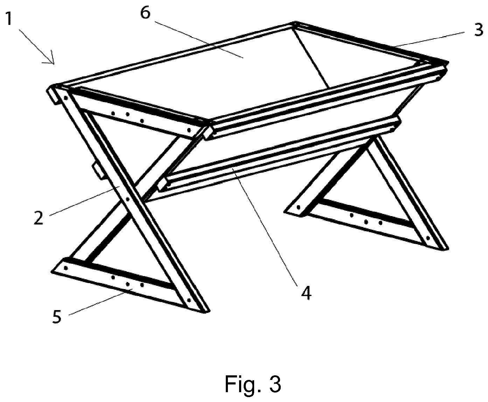

- Figure 3 represents a perspective view of another embodiment;
- Figure 4 represents a perspective view of a properly stacked embodiment;
- Figure 5 represents an exploded view of the embodiment in figure 4;
- Figure 6 represents a perspective view of another embodiment;
- Figure 7 represents a perspective view of another embodiment;
- Figure 8 represents an exploded view of the embodiment in figure 7;
- Figure 9 represents a perspective view of one of the stacked embodiments;

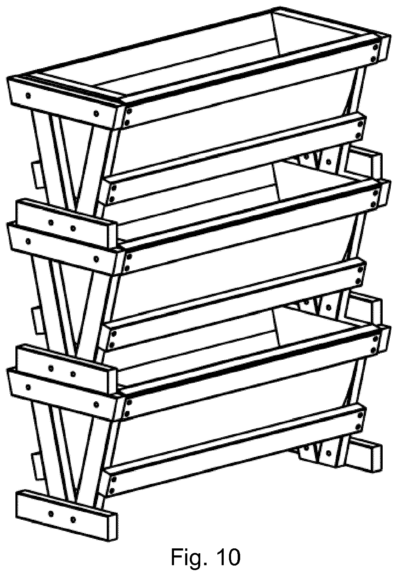

- Figure 10 represents a perspective view of a properly stacked embodiment;
- Figure 11 represents a perspective view of another embodiment;
- Figure 12 represents a perspective exploded view of the embodiment shown in figure 11;

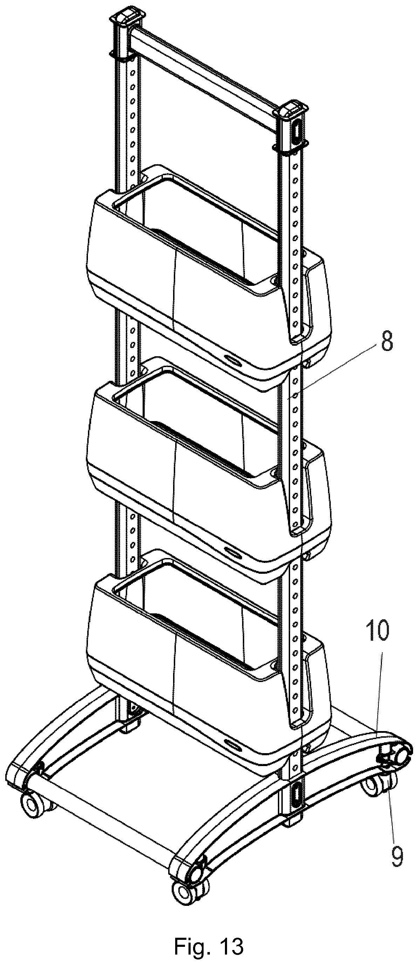

- Figure 13 represents a perspective view of another properly stacked embodiment shown in figure 11;
- Figure 14 represents a perspective view of an independent water deposit functioning as a support base for germination modules;

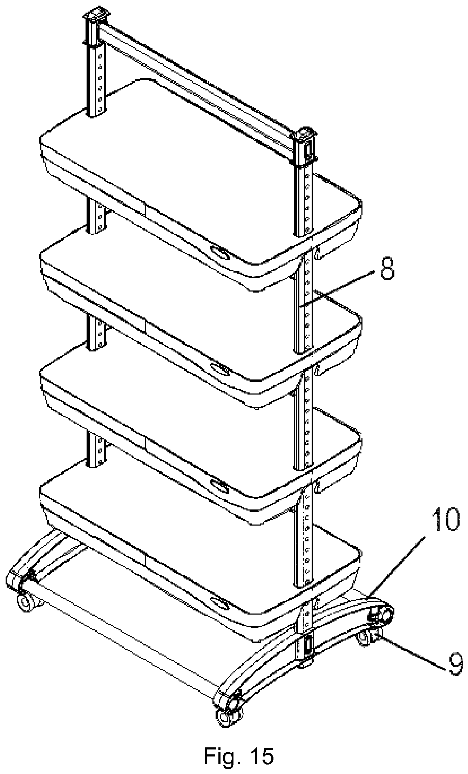

- Figure 15 represents a perspective view of independent, but stacked water deposits; and

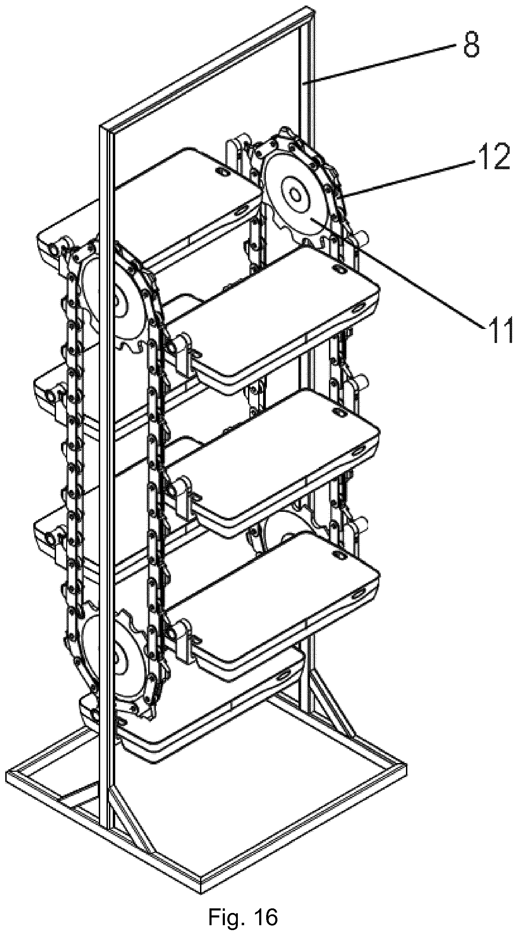

- Figure 16 represents a perspective view of independent, stacked water deposits with vertical handling.

### Detailed description of the invention

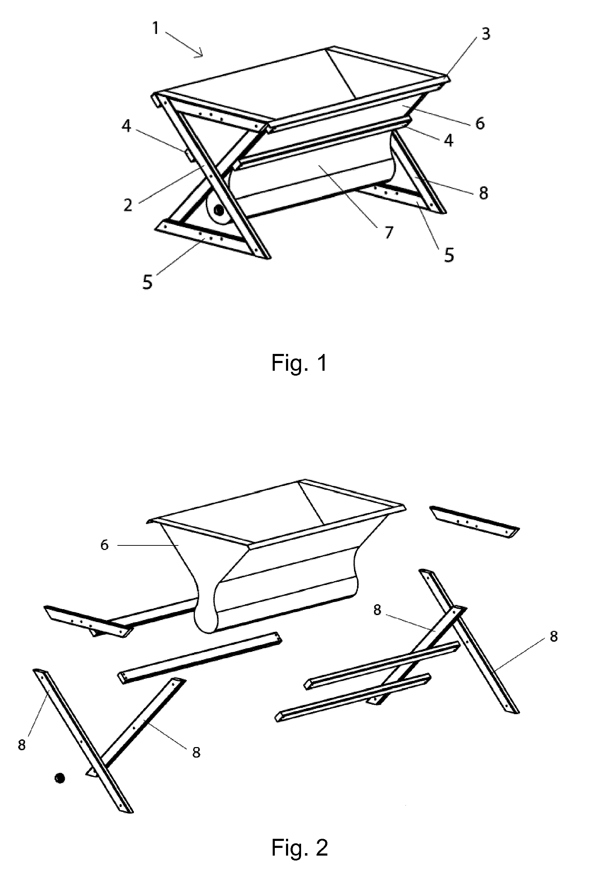

The embodiment shown in figure 1, which represents the most characteristic form of the invention, comprises:
- a rigid frame, generally represented by (1), which in turn comprises at least two mounting supports (2), one for each side of the container, a top ring (3) preferably in a quadrilateral shape, supplemented with lateral and transverse (5) and longitudinal reinforcing beams (4);
- a reservoir (6) for plant, soil or hydroponic substrate, supported on said frame;
- a water deposit (7); and
- a water transmission system (not represented) to said reservoir (6).

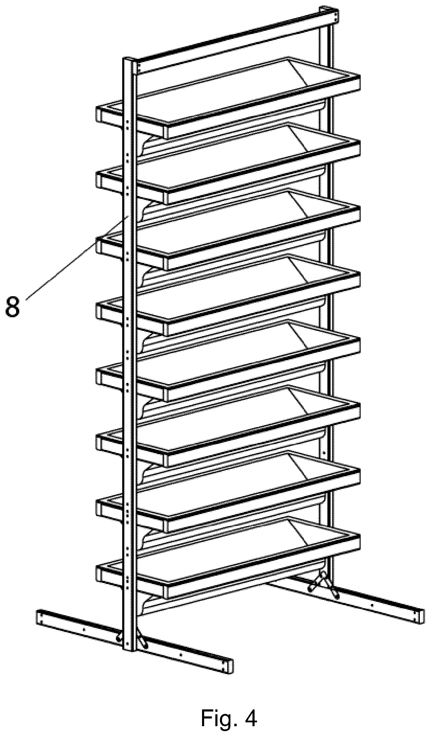

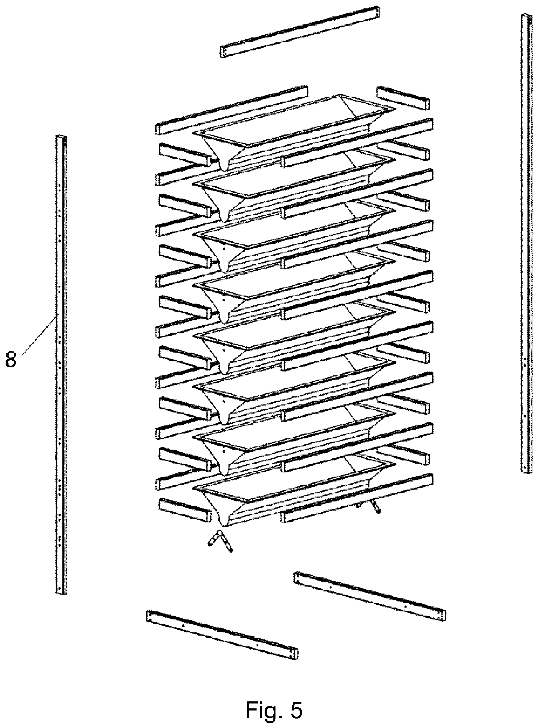

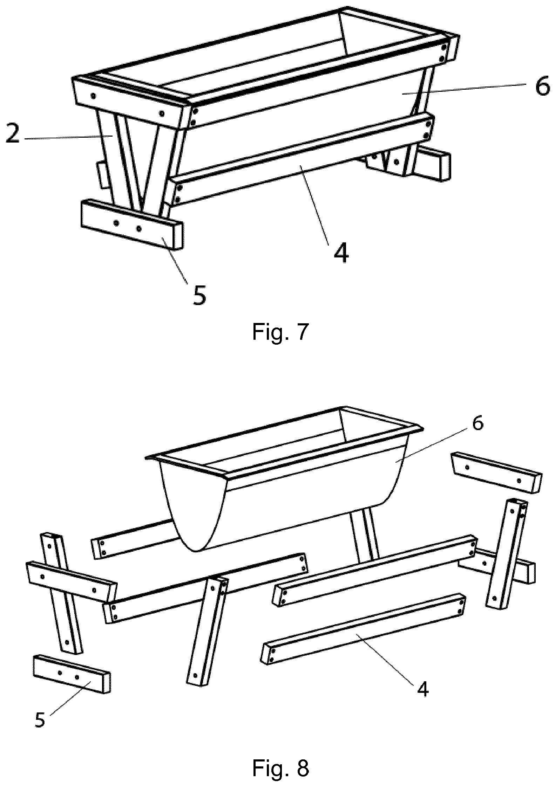

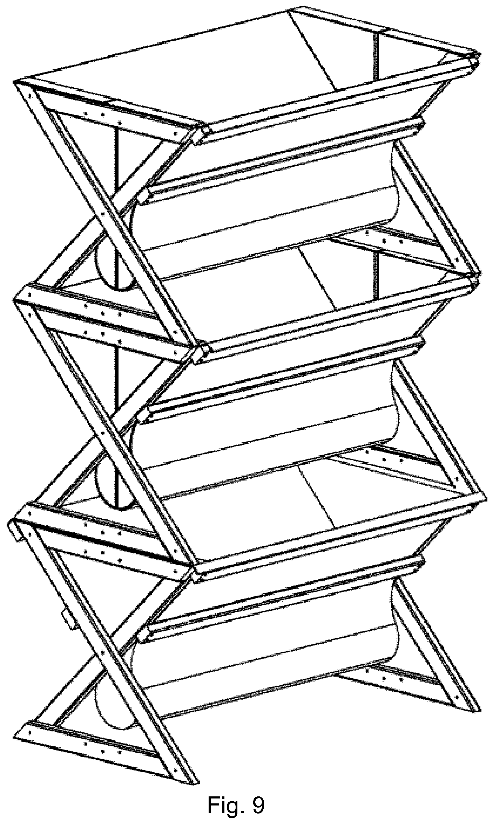

The aforementioned mounting supports (2) constitute frames comprised by at least one batten (8) as in the embodiment shown in figures 4 and 5, or by two battens (8) arranged in an "X" shape (embodiment shown in figures 1 and 2) or a "V" shape (embodiment shown in figures 8 and 9). When the battens (8) of the mounting supports are arranged in an "X" or "V" shape, they can be joined at the intersection point, with said junction fixed with appropriate means. Such appropriate means can be, for example, nuts and bolts or other equivalent devices.

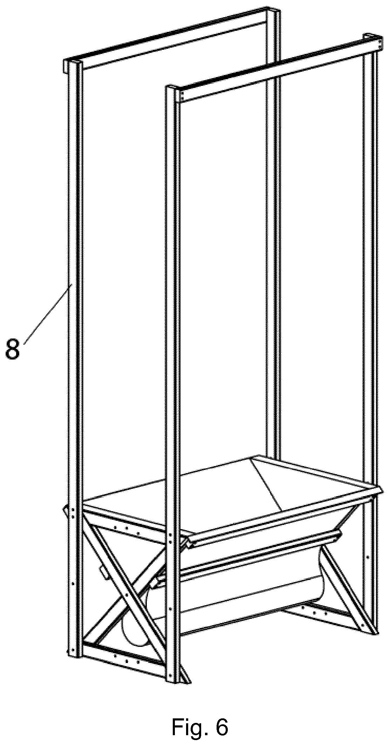

As shown in figures 6 and 7, the mounting supports can be composed by two lateral battens (8), arranged vertically and in parallel. To allow the stacking of containers of the same embodiment, these battens (8) have a height that allows them to support at least one plant substrate container.

In any of the embodiments, said top ring (3) and longitudinal (4) and transverse beams (5) are rigidly fixed, respectively, at the upper end of the mounting supports (2), in the intermediate part of the legs of those supports (2) and in the lower part of said mounting supports (2), in the case of individual containers. As can be seen, when the containers are stacked, the second and following containers only overlap the structure of the container immediately below.

The entire frame (1) and in particular the mounting supports, the top ring and the beams should preferably be made of wood. Other materials such as aluminium, iron, etc. can, however, be used.

This reservoir (6) for plants, soil or hydroponic solution substrate, supported on said frame, is composed of mouldable materials, such as canvas, fabric or plastic material.

This reservoir (6) is permanently fixed to the top ring (3) at the top of the top ring. These fixing means may be constituted through eyelets, velcro, rivets, etc. distributed across the top of the reservoir and top ring. The reservoir (6) is made of a single piece stitched on the sides so as to form a bag-like container.

Thus, said reservoir (6) presents, in its bottom half, a seam along its longest length, under which said water deposit (7) is outlined, a seam that is not continuous and presents passages (not represented) for strips of felt-like material that constitute the elements for water transmission to the plant, reservoir or soil substrate itself. As can be seen, if the reservoir is intended for hydroponic culture, it is not equipped with a water deposit (7) in the same reservoir.

This reservoir (6), and the water deposit (7), where appropriate, are arranged within the longitudinal beams (4) and configured in a way to substantially form a "V" shape.

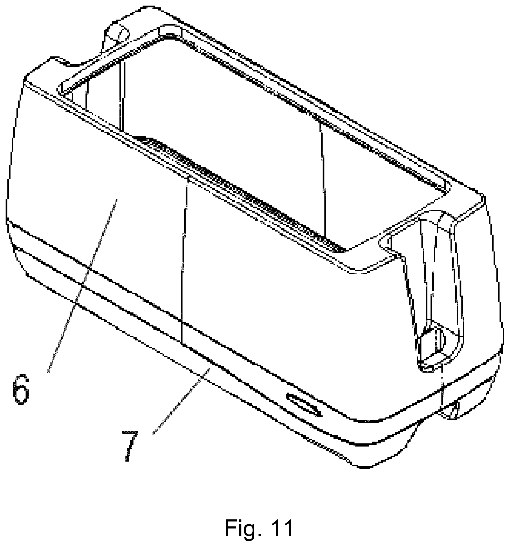

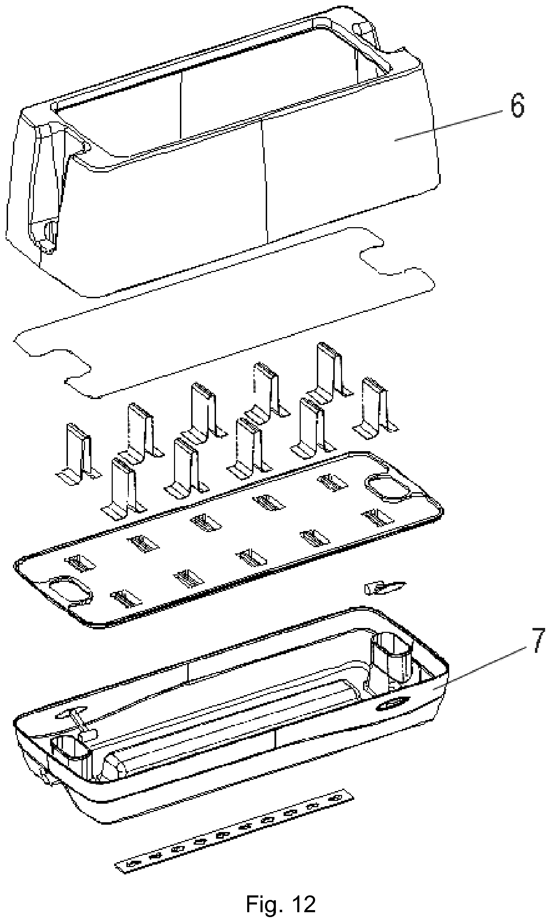

Said reservoir (6) (see figures 11 and 12) can also be made of rigid material, preferably in a parallelepiped-shaped box.

Should the reservoir (6) be a rigid piece, the deposit (7) is a bottom partition in said reservoir (6). As in the previous embodiment, the water flow from the deposit (7) to the substrate reservoir (6) is done via holes for the passage of felt-type material strips that constitute the elements for water transmission.

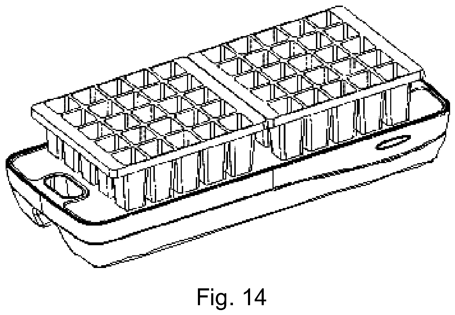

The deposit (7) of this embodiment can also be used separately from the reservoir (6). In this case, the deposit may comprise the support base of another kind of substrate reservoir such as pots, germination modules (see Figure 14), etc.

The containers of this invention can have horizontal handling means, and, if stacked, vertical handling means. These horizontal handling means are comprised of wheels (9) assembled under the feet (10) of the structure. The vertical handling is mainly comprised by pulleys (11) and chains (12) and ensures the placement of the container's upper surface at the user's working level.

Joining similar structures will allow the formation of several cultivation beddings at various levels.

It should also be said that the structure, at the top ring level, can have various stakes that will serve as support for the planted species. These stakes will be set on top of the structure components.

Many other embodiments are possible based on the fundamental elements that comprise the container hereby proposed.

One of the possible variants is related to the height of the containers' stacking. Indeed, some of embodiments, for example, the containers with support structures in "X" or "V" shape or those that simply have parallel and vertical beams, can withstand at least more than one container being stacked.

Other variants are related to greenhouses or other type of crop protection, for which the mounting supports should be used as support structures for appropriate coverage.

Another variant establishes the placement of stakes for various kinds of culture, these stakes being fixed to the frame, in this case comprised additionally by a rod that is joined to the top ring (3).

Another variant establishes the placement of a shelf, tray immediately below the soil or water substrate reservoir.

In yet another variant, the water deposit can be rigid and placed next to the container, with the water transmission system being identical or similar to the one used in the most basic embodiment referred to previously.

Also within the spirit of the invention is a plant container that comprises a substrate container for plants as previously mentioned, i.e. made of flexible material formed by a pouch or bag, in which is placed either the substrate or soil and, where appropriate, a water deposit that can be equipped with a water transmission system such as the one described. In this embodiment, which also provides the formation of more than one pouch or bag which can be overlapped or simply arranged next to or over each other, all made from the same piece of flexible material, the support structure can be made of only one beam on which this piece of flexible material is suspended. This embodiment is different from those previously mentioned because it does not need a structure as the one defined for those embodiments. Basically, the bag(s) are made from a single piece through multiple seams.

There is no intention of limiting the many options that were previously mentioned. No doubt, there will be other variants that fall within the scope of the following claims.

## Claims

1. Plant container **characterised in that** it comprises:
- a rigid frame (1) formed by at least two mounting supports (2), one for each side of the container, a top ring (3) preferably in a quadrilateral shape, supplemented with lateral and transverse (5) and longitudinal reinforcing beams (4);
- one soil, water or plant substrate reservoir (6), supported on said frame;
- one water deposit (7); and
- one water transmission system to said substrate.

2. Plant container according to claim 1, **characterised in that** said mounting supports (2) constitute frames composed by at least one batten (8).

3. Plant container according to claim 1, **characterised in that** said battens (8) are arranged in such a way as to be intersected in an articulated form as an "X" or "V" shape, said junction being fixed by appropriate means.

4. Plant container according to claim 1, **characterised in that** said battens (8) are arranged vertically and in parallel and having sufficient height to support at least one plant substrate container.

5. Plant container according to the previous claims, **characterised in that** the frame fixing means are nuts and bolts.

6. Plant container according to the previous claims, **characterised in that** said top ring (3), the longitudinal (4) and transverse (5) reinforcing beams are rigidly fixed, respectively, at the top of the mounting supports, the middle of the structure's legs and at the bottom of the mounting frame (1).

7. Plant container according to the previous claims, **characterised in that** said plant, soil or water substrate reservoir (6) is made of malleable material.

8. Plant container according to the previous claims, **characterised in that** said malleable material is either canvas, fabric, plastic material or coated cork.

9. Plant container according to the previous claims, **characterised in that** said plant, soil or water substrate reservoir (6) is fixed at the top of the top ring (3) by appropriate means, serving as a bag-type reservoir made of a single piece stitched on the sides.

10. Plant container according to the previous claims, **characterised in that** said reservoir (6) has a seam along the lower part of the longest length of the container, under which said water deposit (7) is outlined, a seam that is not continuous and presents holes for the passage of felt-type material straps that constitute the elements for water transmission.

11. Plant container according to the previous claims, **characterised in that** said reservoir (6) and water deposit (7) are arranged in "V" shape within the longitudinal reinforcing beams (4).

12. Plant container according to claim 1, **characterised in that** said reservoir (6) is in a rigid material, preferably forming a parallelepiped-shaped box.

13. Plant container according to the preceding claim, **characterised in that** the deposit (7) is constituted by a lower portion of said reservoir (6), communicating with it through holes for passing felt-type material strips constituting the water transmission elements.

14. Plant container according to the preceding claim, **characterised in that** the deposit (7) is removable from the reservoir (6) and working independently from the reservoir.

15. Plant container according to the previous claims, **characterised in that** it is stackable in height and is provided with horizontal handling means.

16. Plant container according to the previous claims, **characterised in that** the mounting supports (2) are also structural elements for greenhouses or other types of protections.

17. Plant container according to the previous claims, **characterised in that**, when stackable, it is provided with means of vertical handling through manual or mechanical activation, said means being preferably constituted by pulleys (11) and chains (12).
